# EUROPÄISCHE PATENTSCHRIFT

(11) **EP 0 756 718 B1**
(45) Veröffentlichungstag und Bekanntmachung des Hinweises auf die Patenterteilung: **24.10.2001**
(21) Anmeldenummer: 95917924.3
(22) Anmeldetag: 13.04.1995
(51) Int. Cl.: G02F 1/15, C09K 9/00

(54) **ELEKTROCHROME DÜNNSCHICHTSYSTEME UND DEREN KOMPONENTEN**
ELECTROCHROMIC THIN-FILM SYSTEMS AND COMPONENTS THEREOF
SYSTEMES A COUCHE MINCE ELECTROCHROMIQUE ET LEURS CONSTITUANTS

(30) Priorität: 18.04.1994 DE 4413403
(43) Veröffentlichungstag der Anmeldung: 05.02.1997
(60) Teilanmeldung: 00126199.9
(73) Patentinhaber: INSTITUT FÜR NEUE MATERIALIEN gemeinnützige GmbH, 66123 Saarbrücken (DE)
(72) Erfinder: SCHMIDT, Helmut, D-66130 Saarbrücken (DE); KRUG, Herbert, D-66346 Püttlingen (DE); MERL, Norbert, D-66123 Saarbrücken (DE); MOSES, Anke, D-65239 Hochheim (DE); JUDEINSTEIN, Patrick, F-91190 Gif-sur-Yvette (FR); BERNI, Anette, D-66424 Homburg (DE)
(74) Vertreter: Barz, Peter, Dr.
(86) Internationale Anmeldenummer: EP9501384
(87) Internationale Veröffentlichungsnummer: WO9528663

(56) Entgegenhaltungen:
- EP-A- 0 372 584
- EP-A- 0 420 253
- EP-A- 0 532 408
- WO-A-94/20507
- PATENT ABSTRACTS OF JAPAN vol. 012, no. 220 (P-720) 23. Juni 1988 & JP,A,63 015 228 (ASAHI GLASS CO LTD) 22. Januar 1988 & DATABASE WPI Week 8809, Derwent Publications Ltd., London, GB; AN 88-060029 & JP,A,63 015 228
- PATENT ABSTRACTS OF JAPAN vol. 010, no. 314 (C-380) 24. Oktober 1986 & JP,A,61 123 691 (ASAHI GLASS CO LTD) 11. Juni 1986 & DATABASE WPI Week 8630, Derwent Publications Ltd., London, GB; AN 86-192320 & JP,A,61 123 691
- PATENT ABSTRACTS OF JAPAN vol. 010, no. 314 (C-380) 24. Oktober 1986 & JP,A,61 123 690 (ASAHI GLASS CO LTD) 11. Juni 1986 & DATABASE WPI Week 8630, Derwent Publications Ltd., London, GB; AN 86-192319 & JP,A,61 123 690
- SOLAR ENERGY MATERIALS AND SOLAR CELLS, Bd.31, Nr.1, Oktober 1993, AMSTERDAM, NL; Seiten 9 - 21, XP000397393 A. AGRAWAL ET AL. 'Review of Solid State Electrochromic Coatings Produced Using Sol-Gel Techniques'
- SOLID STATE IONICS, Bd.51, Nr.3/4, April 1992, AMSTERDAM, NL; Seiten 239 - 247, XP000359478 P. JUDEINSTEIN ET AL. 'Electrochemical Degradation of WO3.nH20 Thin Films'
- DATABASE WPI Derwent Publications Ltd., London, GB; AN 92-110755 & JP,A,04 053 872 (TONEN SEKIYU KAGAKU KK.) 21. Februar 1992

## Beschreibung

Die vorliegende Erfindung betrifft elektrochrome Dünnschichtsysteme und deren Komponenten, insbesondere solche, die über das Sol-Gel-Verfahren hergestellt werden.

Elektrochrome Dünnschichtsysteme werden in der Literatur in großer Zahl für verschiedene Anwendungsbereiche und in unterschiedlichen Kombinationen von Einzelkomponenten beschrieben.

Zur Herstellung der funktionalen Oxidschichten wurden bisher überwiegend Vakuummethoden wie thermisches Verdampfen, Sputtern oder CVD sowie Sprühpyrolyse und elektrochemische Abscheideverfahren beschrieben. Für die Herstellung großflächiger homogener Beschichtungen sind diese Verfahren jedoch ungeeignet bzw. zu kostenintensiv. In den letzten Jahren wurde ansatzweise versucht, derartige Systeme über Sol-Gel-Verfahren zu erzeugen, da diese sich durch eine große Variationsbreite und bedingt durch die Vermeidung der Vakuumtechnik durch wesentlich geringere Kosten für die Herstellung großflächiger homogener Beschichtungen auszeichnen. Die in der Literatur beschriebenen Systeme sind jedoch bisher noch nicht voll zufriedenstellend.

Insbesondere führt im Falle elektrochromer Oxidschichten, besonders der Wolfram- und Molybdänoxide, die Tatsache, daß die Oxide in einem frisch hergestellten Dünnschichtsystem anfangs frei von Alkaliionen sind, dazu, daß diese Systeme eine relativ lange Zeit betrieben werden müssen, bevor sich nach und nach das gewünschte Insertionsungleichgewicht durch Einlagerung von Alkaliionen aus dem Elektrolytionenvorrat einstellt. Dies führt zu anfänglichen Funktionseinbußen.

Eine Aufgabe der vorliegenden Erfindung war es deshalb, elektrochrome Oxidschichten auf der Basis von Wolfram- und/oder Molybdänoxiden herzustellen, die sofort nach ihrer Herstellung voll funktionsfähig sind.

Gemäß der vorliegenden Erfindung wurde überraschend gefunden, daß bei bekannten Wolframoxid- und Molybdänoxid-Herstellungyerfahren ein Teil des Oxids durch Umsetzung mit Alkalimetallhydroxiden in das entsprechende Alkaliwolframat bzw. -molybdat überführt werden kann, ohne daß die elektrochrome Funktion negativ beeinflußt oder die Verarbeitbarkeit der Schichten beeinträchtigt wird. Die Einstellung eines stabilen Arbeitszustandes wird hierdurch erheblich beschleunigt. Bei geeigneter Reaktionsführung führt der Zusatz der Alkaliionen auch nicht zu negativen Veränderungen der optischen Schichteigenschaften bzw. der Soleigenschaften.

Der erste Gegenstand der vorliegenden Erfindung ist ein Verfahren zur Herstellung einer elektrochromen Oxidschicht.

Das Alkalimetall wird im allgemeinen aus Lithium, Natrium und/oder Kalium ausgewählt, wobei Lithium und Natrium bevorzugte Alkalimetalle sind und Lithium besonders bevorzugt wird.

Konkrete Beispiele für derartige Alkalimetallhydroxide sind LiOH, NaOH und KOH, wobei LiOH ein besonders bevorzugtes Alkalimetallhydroxid ist.

Das Alkalimetallhydroxid kann zu irgendeinem Zeitpunkt vor, während oder nach der Herstellung des Wolframoxids und/oder Molybdänoxids erfolgen, obgleich es bevorzugt am Schluß zugegeben wird, d.h. zur an sich beschichtungsfertigen Lösung.

Die eingesetzte Menge an Alkalimetallhydroxid liegt im allgemeinen im Bereich von 0,001 bis 1,0 Mol, vorzugsweise 0,01 bis 0,75 Mol und insbesondere 0,01 bis 0,5 Mol Alkalimetall pro Mol Wolfram und/oder Molybdän. Besonders bevorzugt ist ein Bereich von 0,02 bis 0,6 und insbesondere 0,05 bis 0,3 Mol Alkalimetall pro Mol W und/oder Mo.

Das Lösungsmittel für die obige Beschichtungslösung ist im allgemeinen zumindest hauptsächlich ein bei Raumtemperatur flüssiger Alkohol, bevorzugt ein Alkohol mit 1 bis 4 Kohlenstoffatomen. Konkrete Beispiele hierfür sind Methanol, Ethanol, Propanol und Isopropanol.

Die Konzentration von Wolfram und/oder Molybdän in der Beschichtungslösung beträgt im allgemeinen 1 bis 50 Gewichtsprozent, vorzugsweise 2 bis 40 Gewichtsprozent, bezogen auf MO₃ (M = W und/oder Mo). Besonders bevorzugt liegen 5 bis 30 und insbesondere 10 bis 20 Gewichtsprozent MO₃ in der Beschichtungslösung vor.

Bei der Herstellung von Beschichtungslösungen über die Metall + H₂O₂-Route werden z.B. Lösungen von Peroxowolframsäure durch Umsetzung von Wolframmetall mit wäßrigem Wasserstoffperoxid (üblicherweise in einer Konzentration von 10 bis 30 Gewichtsprozent H₂O₂) hergestellt, wobei das Metall üblicherweise vorgelegt und die Peroxidlösung portionsweise zugegeben wird und bei jeder Zugabe die vollständige Umsetzung abgewartet wird. Die Reaktionstemperatur wird üblicherweise durch ein Thermostatbad auf 0 bis 80°C, vorzugsweise 40 bis 60°C, eingestellt. Nach der Umsetzung wird die gewünschte Menge eines kurzkettigen Alkohols (z.B. Methanol, Ethanol, 1- oder 2-Propanol oder Gemische hiervon) zugegeben, die klare Lösung wird bei 20°C bis 50°C 1 bis 24 Stunden, vorzugsweise 4 bis 8 Stunden, gerührt und danach unter Erwärmen auf 30 bis 70°C, vorzugsweise 45 bis 55°C, unter reduziertem Druck (z.B. 50 bis 300 mbar) fast zur Trockene eingeengt und dann auf Raumtemperatur abgekühlt. Durch Auflösen in den reinen Alkoholen (s.o.) kann eine Lösung mit definiertem Gehalt an Peroxosäure (bevorzugt 10 bis 50 Gewichtsprozent, insbesondere 15 bis 25 Gewichtsprozent, berechnet als WO₃) erhalten werden, die fertig für die Beschichtung ist. Gemäß der vorliegenden Erfindung wird vorzugsweise dieser ansonsten fertigen Beschichtungslösung das Alkalimetallsalz in den oben angegebenen Mengen zugegeben. Auch diese Lösung kann zur Verlängerung ihrer Haltbarkeit bei Temperaturen von bis zu -20°C aufbewahrt werden.

Die wie oben hergestellten Beschichtungslösungen können z.B. über Tauch-, Sprüh- oder Schleuderbeschichtungsverfahren auf vorbereitete Substrate aufgetragen werden. Vorzugsweise wird diese Auftragung bei einer Temperatur von 15 bis 25°C und einer relativen Luftfeuchtigkeit von 5 bis 50°C durchgeführt. Ein besonders bevorzugter Temperaturbereich liegt bei 18 bis 22°C und insbesondere bei 19 bis 21°C. Bevorzugte relative Luftfeuchtigkeiten sind 10 bis 30 und insbesondere 15 bis 25% im Falle der Wolframoxochlorid-Route und 5 bis 30 und insbesondere 5 bis 15% im Falle der Peroxosäure-Route.

Die wie soeben beschrieben beschichteten Substrate werden dann zur Herstellung der fertigen elektrochromen Schicht thermisch nachbehandelt. In der Regel umfaßt eine derartige thermische Nachbehandlung das Erwärmen auf eine Temperatur von 80 bis 400°C für 10 Minuten bis 48 Stunden. Ein bevorzugter Temperaturbereich liegt bei 100 bis 250°C und insbesondere 140 bis 200°C, während bevorzugte Behandlungszeiten 15 Minuten bis 24 Stunden und insbesondere 30 Minuten bis 12 Stunden betragen.

In einem Beschichtungschritt können so Schichten bis zu 500 nm Dicke rißarm erzeugt werden. Es können aber auch mehrere (z.B. bis zu 5) Schichten übereinander abgeschieden werden, wobei vorzugsweise nach jedem Beschichtungsschritt eine thermische Nachbehandlung (Verdichtung) erfolgt. So ist es möglich, durch unterschiedliche thermische Behandlung von mehreren Schichten Gradientensysteme übereinander zu erzeugen. Durch Verwendung unterschiedlicher Beschichtungslösungen für die Mehrfachbeschichtung sind aber z.B. auch Gradienten des Lithiumgehaltes einstellbar.

Zur Verbesserung der Haftung kann die erste Beschichtung auf einem Substrat mit Hilfe einer relativ verdünnten Lösung (z.B. 0,05 bis 0,15 Mol/Liter, insbesondere etwa 0,1 Mol/Liter Metalloxid) erzeugt und thermisch z.B. bei 180 bis 230°C, insbesondere 200 bis 210°C, 15 bis 45 Minuten, insbesondere 25 bis 35 Minuten lang nachbehandelt werden.

Bei der (besonders bevorzugten) Tauchbeschichtung kann eine Beschichtung der Substratrückseite dadurch vermieden werden, daß die Rückseite z.B. mit einem selbstklebenden Band maskiert wird. Diese Maskierung wird vor der thermischen Nachbehandlung vorzugsweise entfernt.

Als Substrat (Träger) für die wie oben hergestellte elektrochrome Dünnschicht eignen sich prinzipiell alle transparenten Substrate, die mit einer transparenten leitfähigen Schicht versehen werden können und den bei der thermischen Nachbehandlung der aufgetragenen Schicht einzusetzenden Temperaturen standhalten. Bevorzugt sind diese Substrate aus Glas oder transparentem Kunststoff, z.B. entsprechende Platten mit einer Dicke von im allgemeinen 0,5 bis 6,0 mm, vorzugsweise 0,9 bis 2,0 mm. Diese (vorzugsweise Glas-)Platten sind entweder völlig plan oder nur leicht gewölbt.

Die auf dem transparenten Substrat vorgesehene leitfähige Schicht kann eine übliche transparente leitfähige Schicht sein, z.B. eine solche aus Indium-Zinnoxid (ITO), Fluor-dotiertem Zinnoxid und Antimon-dotiertem Zinnoxid, sowie aus dotiertem Zinkoxid und dotiertem Titanoxid. In bestimmten Fällen können aber auch dünne Metallschichten (z.B. aus Silber mit einer Dicke von <20 nm) als transparente elektronenleitende Schichten verwendet werden.

Wird als Schichtträger ein Glassubstrat verwendet, dann kann zwischen dem Glassubstrat und der elektronenleitenden Schicht zur Vermeidung der Alkalidiffusion aus dem Glas eine Diffusionssperrschicht, z.B. aus SiO, vorgesehen werden. Der Widerstand der elektronenleitenden Schicht sollte möglichst klein sein, vorzugsweise je nach Anwendungsgebiet bzw. Substratgröße unter 100 Ω/□, insbesondere unter 20 Ω/□.

Üblicherweise werden die Substrate nach dem Zuschnitt auf die gewünschte Größe einer definierten Wasch- und Reinigungsprozedur unter Anwendung von organischen Lösungsmitteln, Tensidlösungen und Reinstwasser im Ultraschallbad unterzogen.

Die elektrochromen Dünnschichtsysteme der vorliegenden Erfindung beinhalten einen Elektrolyten, der z.B. erhältlich ist durch
(a) partielle Hydrolyse und Kondensation mindestens eines Silans der allgemeinen Formel

   RₙSiX₄₋ₙ (I)

   worin die Reste R, gleich oder verschieden voneinander, für nicht-hydrolysierbare Gruppen stehen, von denen mindestens eine eine thermisch oder photochemisch polymerisierbare (bzw. polykondensierbare) Gruppierung umfaßt, die Reste X, gleich oder verschieden voneinander, für OH oder hydrolysierbare Gruppen stehen und n 1 oder 2 ist;
(b) Umsetzung des partiell hydrolysierten (kondensierten) Silans von Stufe (a) mit einem bei Raumtemperatur flüssigen Diol und/oder Triol (vorzugsweise Diol), gegebenenfalls (und vorzugsweise) in Anwesenheit eines Initiators;
(c) Einstellung eines pH-Wertes im Bereich von 4,0 bis 8,0 mit Säure;
(d) Zugabe mindestens eines im System löslichen Alkalimetallsalzes zu irgendeinem Zeitpunkt nach Stufe (a) und vor Stufe (c); und
(e) thermische oder Bestrahlungs-Behandlung des resultierenden Systems,
wobei dem System zu irgendeinem Zeitpunkt nach Stufe (a) und vor Stufe (c) zusätzlich mindestens ein Silan der allgemeinen Formel

R'ₘSiX₄₋ₘ (II)

zugegeben wird, in welcher R' für Alkyl, Alkaryl, Aralkyl oder Aryl (vorzugsweise mit bis zu 20 und insbesondere bis zu 12 Kohlenstoffatomen) steht, die Reste X gleich oder verschieden voneinander, für OH oder hydrolysierbare Gruppen stehen und m 0 oder 1 ist.

In der obigen Stufe (a) werden im allgemeinen 10 bis 90%, vorzugsweise 20 bis 80% und insbesondere 30 bis 70% aller vorhandenen hydrolysierbaren Gruppen hydrolytisch abgespalten.

Beispiele für Gruppen X in den Formeln (I) und (II) sind solche der Formel OR" und OCOR", in denen R" für Alkyl mit 1 bis 8, insbesondere 1 bis 4 Kohlenstoffatome steht, sowie Halogen, insbesondere Chlor.

Vorzugsweise sind die Gruppen X identisch und ausgewählt aus OCH₃, OC₂H₅ und OC₃H₇, wobei OCH₃ und OC₂H₅ besonders bevorzugt sind.

Die Gruppen R in der Formel (I) sind vorzugsweise solche, die (mindestens) eine ethylenisch ungesättigte Bindung und/oder (mindestens) einen Epoxidring aufweisen. Konkrete Beispiele hierfür sind (Meth)acryloxy-C₂₋₆-alkyl und Glycidoxy-C₂₋₆-alkyl, wobei ein bevorzugtes Beispiel für die C₂₋₆-Alkylgruppe Propyl ist.

Weiter wird es bevorzugt, daß n in Formel (I) 1 bedeutet. Unter Berücksichtigung der soeben genannten bevorzugten Ausführungsformen sind somit (insbesondere unter Berücksichtigung ihrer leichten Zugänglichkeit) besonders bevorzugte konkrete Verbindungen der allgemeinen Formel (I) Glycidoxypropyltri (m)ethoxysilan und Methacryloxypropyltri(m)ethoxysilan.

Bei dem in der obigen Stufe (b) einzusetzenden bei Raumtemperatur flüssigen Diol und/oder Triol handelt es sich bevorzugt um ein Poly-C₂₋₆-alkylenglykol, insbesondere um ein Polyethylen- oder Polypropylenglykol. Konkrete Beispiele hierfür sind z.B. Diethylenglykol, Triethylenglykol, Tetraethylenglykol und Dipropylenglykol.

Andere bevorzugte Diole und/oder Triole, die in Stufe (b) eingesetzt werden können, sind Alkylenoxid-Addukte eines herkömmlichen Diols und/oder Triols (z.B. von Ethandiol, Propandiol, Butandiol, Hexandiol, Glycerin und Trimethylolpropan) mit Ethylenoxid und/oder Propylenoxid, wobei z.B. 1 bis 20, vorzugsweise 1 bis 10 Mol Ethylenoxid und/oder Propylenoxid an das Diol oder Triol addiert sein können.

Im Falle der Verwendung eines Silans der allgemeinen Formel (I) , das einen Epoxidring umfaßt, dient die vorzugsweise eingesetzte Initiatorverbindung dazu, die Polymerisation der Epoxidgruppen und die teilweise Verknüpfung derselben mit den Diolen und/oder Triolen zu katalysieren. Zu diesem Zweck wird der Initiator vorzugsweise ausgewählt aus organischen Aminen, wie z.B. 1-Methylimidazol, N-3-(Triethoxy)propyl-4,5-dihydroxyimidazol, 4,4'-Diaminodiphenylmethan, Benzyldimethylamin und Diazabicycloundecan, Amingruppen-haltigen Silanen, wie z.B. N-(2-Amino-3-aminopropyl)-trimethoxysilan und 3-Aminopropyltrimethoxysilan, organischen Aluminiumverbindungen, wie z.B. Aluminium-sek.-butylat und Aluminiumbutoxyethanolat, gegebenenfalls nach Komplexierung mit einem Chelatliganden, und Aluminiumsalzen organischer und anorganischer Säuren wie z.B. Essigsäure, Propionsäure, Perchlorsäure, Salzsäure, Schwefelsäure, Phosphorsäure usw., gegebenenfalls nach vorheriger Komplexierung mit einem Chelatliganden. Selbstverständlich können auch andere Initiatoren eingesetzt werden, wie z.B. Bortrifluorid-Ethylamin-Komplex.

Das einzusetzende und die Leitfähigkeit des Elektrolyten deutlich erhöhende und die Aushärtung beschleunigende Silan der allgemeinen Formel (II) ist vorzugsweise ein solches, bei dem m 0 ist oder R' für C₁₋₄-Alkyl (z.B. Methyl oder Ethyl) steht. Besonders bevorzugte konkrete Beispiele für Silane der allgemeinen Formel (II) sind Tetramethoxysilan und Tetraethoxysilan.

Das gemäß Stufe (d) zuzugebende Alkalimetallsalz kann prinzipiell jedes Alkalimetallsalz sein, das sich im Beschichtungssystem löst. Im allgemeinen handelt es sich um ein Salz von Lithium, Natrium und/oder Kalium, insbesondere Lithium oder Natrium, wobei Lithiumsalze besonders bevorzugt sind. Aufgrund der Löslichkeitseigenschaft handelt es sich bei dem Gegenion in der Regel um das Perchlorat-Anion, obgleich auch andere Salze, wie z.B. Hydroxide verwendbar sind. Konkrete Beispiele für in Stufe (d) einsetzbare Alkalimetallsalze sind LiClO₄, NaClO₄ und LiOH.

Vorzugsweise wird das Alkalimetallsalz gleichzeitig mit oder nach dem in Stufe (b) eingesetzten Diol (Triol) zugegeben.

Obwohl die Mengenverhältnisse der eingesetzten Komponenten in weitem Rahmen schwanken können, werden dennoch im allgemeinen die im folgenden angegebenen Molmengen der einzelnen Komponenten pro Mol Silan der allgemeinen Formel (I) eingesetzt:
(i) 0,01 bis 3,0 Mol, vorzugsweise 0,25 bis 2,25 Mol und insbesondere 1,0 bis 1,75 Mol Diol und/oder Triol;
(ii) 0,01 bis 2,0 Mol, vorzugsweise 0,025 bis 1,0 Mol und insbesondere 0,05 bis 0,75 Mol Alkalimetallsalz;
(iii) 0,01 bis 1,0 Mol, vorzugsweise 0,025 bis 0,5 Mol und insbesondere 0,05 bis 0,25 Mol Initiator;
(iv) 0,01 bis 0,3 Mol, vorzugsweise 0,025 bis 0,2 Mol und insbesondere 0,05 bis 0,15 Mol Silan der Formel (II).

Die in der obigen Stufe (c) zugegebene Säure zur Einstellung eines pH-Wertes im Bereich von 4,0 bis 8,0 kann eine anorganische oder organische Säure wie z.B. Salzsäure, Eisessig oder Adipinsäure sein, die im allgemeinen in Mengen von 0,01 bis 1,5 Mol pro Mol Silan der Formel (I) eingesetzt wird. Bevorzugte Zugabemengen sind 0,05 bis 1,0 und insbesondere 0,1 bis 0,5 Mol Säure pro Mol Silan der Formel (I), wobei bevorzugte pH-Bereiche 5 bis 7,5 und insbesondere 6 bis 7 sind.

Die Einstellung des pH-Wertes in Stufe (c) erfolgt vorzugsweise unmittelbar vor der Verwendung des Systems zur Herstellung des Elektrolyten in der Dünnschichtzelle durch thermische Behandlung. Diese thermische Behandlung wird vorzugsweise bei Temperaturen von 50 bis 150°C für 10 Minuten bis 48 Stunden durchgeführt. Bevorzugte Behandlungstemperaturen liegen im Bereich von 60 bis 120°C und insbesondere 75 bis 100°C, wobei Behandlungszeiten von 15 Minuten bis 24 Stunden und insbesondere 30 Minuten bis 12 Stunden besonders bevorzugt sind.

Im allgemeinen weist ein wie oben beschrieben hergestellter Elektrolyt nanoskalige Partikel mit Radien von bis zu 50 nm, insbesondere bis zu 20 nm, auf.

Die Viskosität der Elektrolytmischungen vor der thermischen Behandlung hängt von der Zusammensetzung und der Standzeit ab und liegt üblicherweise im Bereich von 0,2 bis 1,4 Pa.s, wobei in einigen Fällen eine Tendenz zur Strukturviskosität festgestellt wurde.

Die Schrumpfungsrate bei der thermischen Behandlung (Aushärtung) liegt bei dem nach dem obigen Verfahren hergestellten Material üblicherweise im Bereich zwischen 4 und 12% (ausgedrückt als Volumenabnahme) und kann über die Zusammensetzung des Materials gesteuert werden.

Das bei der thermischen (oder Bestrahlungs-) Behandlung den fertigen Elektrolyten liefernde Material kann z.B. so zwischen die elektrochrome Schicht und die Ioneninsertionsschicht eingebracht werden, daß man es auf eine oder beide der Schichten aufträgt, z.B. durch Auftropfen, Aufstreichen, Rakeln, Sprühen oder Siebdruck.

Hier wird ein Verfahren zur Herstellung einer Beschichtungslösung auf der Basis von Cer- und Titanoxiden zur Verwendung bei der Herstellung von oxidischen nicht-färbenden Ioneninsertionsschichten für elektrochrome Dünnschichtsysteme beschrieben, bei dem man zu einer Lösung eines Cer(III)-Salzes in einem bei Raumtemperatur flüssigen Alkohol (vorzugsweise einem Alkohol mit 1 bis 4 Kohlenstoffatomen wie z.B. Methanol, Ethanol, Propanol und Isopropanol) ein Titantetraalkoxid in einer solchen Menge gibt, daß das atomare Verhältnis Ce:Ti im Bereich von 0,9:1 bis 1:0,9 (vorzugsweise 0,95:1 bis 1:0,95 und insbesondere 0,99:1 bis 1:0,99) liegt, und man die resultierende Lösung in Anwesenheit von Wasser 10 Minuten bis 24 Stunden (vorzugsweise 20 Minuten bis 2 Stunden und insbesondere 30 Minuten bis 90 Minuten) bei Temperaturen von 40°C bis zum Siedepunkt des Lösungsmittels erwärmt.

Als Cer(III)-Salz im obigen Verfahren kann jedes beliebige Cer(III)-Salz eingesetzt werden, das sich in dem bei Raumtemperatur flüssigen Alkohol löst. Beispiele hierfür sind z.B. das Nitrat und das Chlorid, wobei das Nitrat besonders bevorzugt wird.

Bei dem Titantetraalkoxid, das im obigen Verfahren eingesetzt werden muß, handelt es sich vorzugsweise um ein solches der allgemeinen Formel Ti(OR"')₄, wobei R"' für C₁₋₄-Alkyl steht. Konkrete und bevorzugt eingesetzt Titanate sind Ti(OCH₃)₄, Ti(OC₂H₅)₄ und Ti(n- oder i-C₃H₇)₄.

Es wird auch bevorzugt, ein Kristallwasserhaltiges Cer(III)-Salz (wie z.B. Cernitrathexahydrat) einzusetzen, so daß zumindest ein Teil des Wassers (vorzugsweise das gesamte Wasser), das im Verfahren eingesetzt wird, durch dieses Kristallwasser bereitgestellt wird.

Im allgemeinen beträgt die Menge an Wasser, die im obigen Verfahren eingesetzt wird, 0,5 bis 10 Mol, vorzugsweise 1 bis 8 Mol und insbesondere 2 bis 6 Mol pro Mol Titantetraalkoxid. Die Cer- und Titanverbindungen liegen im allgemeinen jeweils in einer Konzentration von 0,01 bis 0,5 Mol pro Liter vor, wobei bevorzugte Konzentrationen 0,025 bis 0,4 und insbesondere 0,05 bis 0,3 Mol pro Liter sind.

Bei der Durchführung des obigen Verfahrens kann z.B. so vorgegangen werden, daß Sole durch Auflösung von Cer(III)-Salz (z.B. Cer(III)nitrathexahydrat) in dem kurzkettigen Alkohol (z.B. Methanol, Ethanol, 1- oder 2-Propanol oder Mischungen derselben) in Konzentrationen von 0,05 bis 0,5 Mol pro Liter, vorzugsweise 0,2 bis 0,3 Mol pro Liter, portionierte Zugabe eines Titantetraalkoxids (z.B. Titantetraisopropoxid) in Konzentrationen von 0,05 bis 0,5 Mol pro Liter, vorzugsweise 0,2 bis 0,3 Mol pro Liter, und Erhitzen der klaren Lösung unter Rückfluß für eine bestimmte Zeit (z.B. 10 bis 120 Minuten, insbesondere 30 bis 90 Minuten) erzeugt werden. Dabei erfolgt eine chemisch kontrollierte Vorhydrolyse unter Bildung nanoskaliger Partikel (Größe <100 nm) und Zunahme der Viskosität. Diese Sole sind, insbesondere bei Aufbewahrung bei Temperaturen um -20°C, über mehrere Wochen haltbar.

Aus diesen Solen können oxidische Beschichtungen hergestellt werden, indem man diese Sole auf geeignete Substrate aufbringt, z.B. durch Tauchen, Sprühen oder Schleudern (vorzugsweise Tauchen). Geeignete Substrate sind dieselben wie die oben im Zusammenhang mit den elektrochromen Dünnschichten beschriebenen. Geeigneterweise erfolgt die Beschichtung unter definierten Bedingungen der Temperatur und der relativen Luftfeuchtigkeit. Im allgemeinen erfolgt die Beschichtung bei Temperaturen von 15 bis 25°C, vorzugsweise 18 bis 22°C und insbesondere 19 bis 21°C bei relativen Luftfeuchtigkeiten von 5 bis 50%, vorzugsweise 10 bis 40% und insbesondere 20 bis 30%.

Wenn eine Tauchbeschichtung durchgeführt wird, erfolgt diese im allgemeinen mit einer Ziehgeschwindigkeit von 2 bis 6 mm pro Sekunde, vorzugsweise 3 bis 5 mm pro Sekunde. Dadurch können Schichtdicken von bis zu etwa 200 nm in nur einem einzigen Beschichtungsschritt rißarm erzeugt werden.

Nach der Beschichtung wird die aufgetragene Schicht thermisch nachbehandelt (verdichtet), wobei hierfür im allgemeinen Temperaturen von 200 bis 600°C und Behandlungszeiten von 5 bis 120 Minuten eingesetzt werden. Bevorzugte Temperaturbereiche sind 250 bis 500 und insbesondere 300 bis 400°C und bevorzugte Behandlungsdauern liegen im Bereich von 10 bis 90 und insbesondere von 15 bis 60 Minuten.

Es können mehrere (z.B. 3) Schichten übereinander abgeschieden werden, wobei nach jedem Beschichtungsvorgang eine thermische Nachbehandlung durchgeführt werden sollte.

Zur Vermeidung einer doppelseitigen Beschichtung bei der Tauchbeschichtung kann die Rückseite des Substrats maskiert werden (z.B. mit einem selbstklebenden Band). Diese Maskierung wird vor der thermischen Behandlung vorzugsweise wieder entfernt.

Gegenstand der vorliegenden Erfindung sind auch elektrochrome Dünnschichtsysteme, die eine oder mehrere der oben beschriebenen Komponenten umfassen. Derartige Dünnschichtsysteme können z.B. aus den obigen Komponenten hergestellt werden, indem man auf eines (oder beide) der beiden oxidbeschichteten Substrate (vorzugsweise auf die CeTiO₂-Schicht) den Elektrolyten aufbringt (z.B. aufrakelt) und das zweite oxidbeschichtete Substrat danach so aufpreßt, das ein blasenfreies System entsteht. Dabei muß für eine Überlappung der Teilsysteme zur späteren Kontaktierung gesorgt werden. Nach der Fixierung wird je nach Initiator im eingesetzten Elektrolyten alternativ thermisch über ein Temperaturprogramm oder durch Bestrahlung mit sichtbarem Licht und anschließende thermische Nachhärtung die Elektrolytschicht durch Polymerisation bzw. Vernetzung ausgehärtet. Dabei wirkt die Elektrolytschicht quasi auch als Klebstoff, der die beiden Schichten aneinander bindet.

Durch eine Versiegelung wird das Austreten von organischen Nebenprodukten sowie das Eintreten von Feuchtigkeit verhindert. Zu diesem Zweck kann der Zwischenraum bzw. der Rand der Dünnschichtzelle mit Materialien wie Zwei-Komponenten-Epoxidklebern, Siliconklebern, Butylkautschuken, Heißklebern und anderen Versiegelungsmaterialien verschlossen werden, wobei auch die Position der beiden Substrate dauerhaft fixiert wird. Die unbeschichteten Randbereiche beider Substrate werden vorzugsweise mit Kohlenstoff- oder Metall-haltigen Leitklebern oder -lacken beschichtet und diese werden zur Kontaktierung z.B. an Metalldrähte angeschlossen.

Zu den Substraten wäre noch zu erwähnen, daß z.B. unter einer der Oxidbeschichtungen oder auf der Rückseite eines der Substrate eine reflektierende (Metall)-Schicht (z.B. aus Pt, Pd, Ag, A1) aufgebracht sein kann, die gleichzeitig als Elektronenleiter und als Reflektor in einem reflektierenden Bauteil dienen kann.

Bisher wurden an Dünnschichtsystemen (im VIS-Bereich von 380 bis 800 nm) integral gemittelte Transmissionsänderungen von 70% auf 20% erreicht, wobei Transientenzeiten (90%→10% bzw. 10%→90% der Endwerte) unter 1 Minute auftraten.

Die folgenden Beispiele dienen der weiteren Erläuterung der vorliegenden Erfindung, ohne deren Umfang jedoch zu beschränken, wobei nur Beispiel 2 unter dem Schutzumfang der Ansprüche fällt.

### Beispiel 1

### (a) Herstellung der elektrochromen Dünnschicht

Zwei Wolframoxidschichten wurden durch zweimaliges Tauchbeschichten eines vorbereiteten Substrates (vorgereinigtes ITO-beschichtetes Glassubstrat mit einer Dicke von 1 mm und einem Widerstand von 20 Ω/□) mit einer 0,1- bzw. 0,5-molaren Wolframoxochlorisopropylat-Lösung erzeugt. Die entsprechenden Lösungen wurden durch Umsetzung von Wolframoxidtetrachlorid (WOCl₄) mit absolutem 2-Propanol in Konzentrationen von 0,1 bzw. 0,5 Mol/Liter unter Stickstoff synthetisiert (0,1 M: 2,39 g WOCl₄ in 70 ml Alkohol; 0,5 M: 11,95 g WOCl₄ in 70 ml Alkohol). Das feste WOCl₄ wurde vorgelegt und der Alkohol wurde portionsweise bei Raumtemperatur zugegeben, wobei HCl-Gas entwich. Die Lösungen wurden anschließend 15 Minuten bei Raumtemperatur gerührt, danach 90 Minuten unter Stickstoff am Rückfluß erhitzt und daraufhin auf Raumtemperatur abgekühlt. Zu diesen Lösungen wurde dann Lithiumhydroxid in einer solchen Menge gegeben, daß sich eine Konzentration von 0,15 Mol Li pro Mol W ergab.

Die anschließende Beschichtung wurde in einer Atmosphärenkontrollierten Kammer bei 10% relativer Luftfeuchtigkeit und 20°C durchgeführt. Die erste Beschichtung erfolgte mit einer 0,1-molaren Lösung, worauf das beschichtete Substrat thermisch 30 Minuten bei 200°C verdichtet wurde. Die zweite Schicht wurde analog mit einer 0,5-molaren Lösung aufgebracht, wobei die Verdichtung bei 150°C 4 Stunden lang erfolgte.

### (b) Herstellung der nicht-färbenden Ioneninsertionsschicht

7,60 g (17,5 mMol) Cer(III)nitrathexahydrat wurden in 70 ml (55,3 g) über Molekularsieb (0,3 nm) getrocknetem Ethanol gelöst. Die Lösung war klar und farblos. Unter Ausschluß von Feuchtigkeit wurden 7,11 g (17,5 mMol) Titantetraisopropylat portionsweise unter Rühren bei Raumtemperatur zugesetzt, wodurch eine gelbe klare Lösung entstand, die dann 60 Minuten am Rückfluß erhitzt wurde, wobei eine visuell erkennbare Eintrübung auftrat. Nach Abkühlen auf Raumtemperatur wurde ein vorgereinigtes ITO-beschichtetes Glassubstrat (Dicke 1,0 mm, Widerstand 20 Ω/□) in die Lösung getaucht und maschinell mit einer Geschwindigkeit von 4 mm pro Sekunde herausgezogen, wobei ein Bereich auf der ITO-beschichteten Seite durch Maskierung unbeschichtet blieb. Die Tauchbeschichtung wurde in einer geschlossenen Kammer durchgeführt, in der eine Temperatur von 20±1°C und eine relative Luftfeuchtigkeit von 30±1% eingestellt wurden. Nach 15 Minuten Wartezeit wurden die beschichteten Substrate in einem Ofen 20 Minuten lang bei 430°C verdichtet und danach mit einer Geschwindigkeit von etwa 20°C pro Minute abgekühlt.

### (c) Herstellung des Elektrolyten

Zur Synthese des Elektrolyten wurde 1 Mol Glycidoxypropyltrimethoxysilan mit 1,5 Mol 0,1-molarer HCl-Lösung vermischt und 24 Stunden bei Raumtemperatur gerührt, worauf das gebildete Methanol bei reduziertem Druck abdestilliert wurde.

1 Mol vorhydrolysiertes Glycidoxypropyltrimethoxysilan wurde dann mit 1,5 Mol Tetraethylenglykol vermischt und die resultierende Lösung wurde anschließend unter Rühren bei Raumtemperatur mit 0,65 Mol Lithiumperchlorat versetzt. Nach der vollständigen Auflösung des Lithiumsalzes (ca. 15 Minuten) wurden 0,08 Mol 3-Aminopropyltrimethoxysilan bei Raumtemperatur als Initiator zugegeben. Danach erfolgte die Zugabe von 0,1 Mol Tetraethoxysilan bei Raumtemperatur. Die zunächst trübe Lösung klarte nach 5 Minuten auf und wurde anschließend noch 30 Minuten lang bei Raumtemperatur gerührt. Vor der Zellmontage wurde der Elektrolyt mit konzentrierter Salzsäure in einer Menge von 1 Mol HCl (pro Mol vorhydrolysiertes Silan) versehen und gut gerührt.

### (d) Herstellung des elektrochromen Dünnschichtsystems

Die oben unter (a) hergestellte Wolframoxidschicht wurde tropfenweise mit dem gemäß (c) hergestelltem Elektrolyten bedeckt und die gemäß (b) hergestellte Cer-/Titanoxidschicht wurde leicht versetzt gegen die Wolframoxidschicht gepreßt, so daß nicht-beschichtete ITO-Flächen überstanden, und fixiert. Zur Aushärtung wurden die Schichten 24 Stunden bei 85°C behandelt. Anschließend wurden die Ränder der Zelle mit Epoxy-Kleber versiegelt, der bei 65°C 20 Stunden ausgehärtet wurde. Die überstehenden nicht-beschichteten ITO-Flächen wurden mit Silberleitlack und Kupferlitze kontaktiert.

### Beispiel 2

Die Herstellung der elektrochromen Wolframoxidschicht erfolgte aus einer ethanolischen Peroxowolframsäure-Lösung, die durch Umsetzung von Wolframmetall mit Wasserstoffperoxid (30%ige wäßrige Lösung) hergestellt wurde, indem die Peroxidlösung vorgelegt und das Metall portionsweise zugegeben wurde. Die Reaktionstemperatur wurde durch ein Thermostatbad bei 60°C gehalten. Nach der Umsetzung wurden 8 ml Ethanol pro g Wolfram zugegeben, die klare Lösung wurde 2 Stunden bei 20°C gerührt und danach unter Erwärmen auf 50°C unter reduziertem Druck (50 bis 300 mbar) fast zur Trockene eingeengt und dann auf Raumtemperatur abgekühlt. Durch Auflösen in Ethanol mit 10 Gewichtsprozent Wasser wurde eine Lösung mit 18 Gewichtsprozent an Peroxosäure hergestellt, die nach Zugabe von Lithiumhydroxid in einer Konzentration von 0,15 Mol Lithium pro Mol Wolfram direkt zur Beschichtung in einer Atmosphärenkontrollierten Kammer verwendet wurde. Die Tauchbeschichtung des Substrats erfolgte bei 10% relativer Feuchtigkeit und 20°C. Das beschichtete Substrat wurde bei 160°C 45 Minuten lang thermisch nachbehandelt.

Ansonsten wurde vorgegangen wie in Beispiel 1 unter (b) bis (d) beschrieben.

## Patentansprüche

1. Verfahren zur Herstellung einer elektrochromen Oxidschicht, **gekennzeichnet durch** Umsetzen von Wasserstoffperoxid mit Wolfram und/oder Molybdän, Auftragen der erhaltenen, oxidisches Wolfram und/oder oxidisches Molybdän enthaltenden Beschichtungslösung auf ein Substrat und thermische Nachbehandlung der aufgetragenen Schicht, wobei in der Beschichtungslösung und/oder einer Vorstufe derselben ein Alkalimetallhydroxid in einer Gesamtmenge von 0,001 bis 1,0 Mol Alkalimetall pro Mol Wolfram und/oder Molybdän gelöst wird.

2. Verfahren nach Anspruch 1, **dadurch gekennzeichnet, daß** es sich bei dem Alkalimetall um Li, Na und/oder K, vorzugsweise um Li und/oder Na, handelt.

3. Verfahren nach Anspruch 2, **dadurch gekennzeichnet, daß** das Alkalimetallhydroxid Lithiumhydroxid ist.

4. Verfahren nach irgendeinem der Ansprüche 1 bis 3, **dadurch gekennzeichnet, daß** das Alkalimetallhydroxid in einer Gesamtmenge von 0,01 bis 0,5 Mol Alkalimetall pro Mol Wolfram und/oder Molybdän eingesetzt wird.

5. Verfahren nach irgendeinem der Ansprüche 1 bis 4, **dadurch gekennzeichnet, daß** das Lösungsmittel für die Beschichtungslösung einen bei Raumtemperatur flüssigen Alkohol, inbesondere einen Alkohol mit 1 bis 4 Kohlenstoffatomen, umfaßt.

6. Verfahren nach irgendeinem der Ansprüche 1 bis 5, **dadurch gekennzeichnet, daß** die Konzentration von Wolfram und/oder Molybdän in der Beschichtungslösung 1 bis 50 Gewichtsprozent, bezogen auf MO₃ (M = W und/oder Mo), beträgt.

7. Verfahren nach irgendeinem der Ansprüche 1 bis 6, **dadurch gekennzeichnet, daß** die Auftragung der Beschichtungslösung bei einer Temperatur von 15 bis 25°C und einer relativen Luftfeuchtigkeit von 5 bis 50%, vorzugsweise durch Tauchen, Sprühen oder Schleudern, erfolgt.

8. Verfahren nach irgendeinem der Ansprüche 1 bis 7, **dadurch gekennzeichnet, daß** die thermische Nachbehandlung bei einer Temperatur von 80 bis 400°C für 10 Minuten bis 2 Tage erfolgt.

9. Elektrochrome Oxidschicht, erhältlich nach dem Verfahren eines der Ansprüche 1 bis 8.

10. Elektrochrome Dünnschichtelektrode, umfassend die elektrochrome Oxidschicht nach Anspruch 9 auf einer transparenten leitfähigen Schicht, die auf einem Glassubstrat oder einem transparenten Kunststoffsubstrat vorgesehen ist.

11. Elektrochromes Dünnschichtsystem, umfassend
(a) eine elektrochrome Oxidschicht,
(b) eine nicht-färbende Ioneninsertionsschicht und
(c) einen zwischen diesen Schichten befindlichen Elektrolyten,
**dadurch gekennzeichnet, daß** Komponente (a) eine elektrochrome Oxidschicht nach Anspruch 9 ist.

## Claims

1. A process for preparing an electrochromic oxide layer, **characterized by** reacting hydrogen peroxide with tungsten and/or molybdenum, applying the coating solution obtained which contains oxidic tungsten and/or oxidic molybdenum to a substrate, and thermally after-treating the applied layer, the coating solution and/or a precursor thereof containing, in dissolved form, an alkali metal hydroxide in an overall quantity of from 0.001 to 1.0 mol of alkali metal per mole of tungsten and/or molybdenum.

2. A process according to Claim 1, **characterized in that** the alkali metal is Li, Na and/or K, preferably Li and/or Na.

3. A process according to Claim 2, **characterized in that** the alkali metal hydroxide is lithium hydroxide.

4. A process according to any one of Claims 1 to 3, **characterized in that** the alkali metal hydroxide is employed in an overall quantity of from 0.01 to 0.5 mol of alkali metal per mole of tungsten and/or molybdenum.

5. A process according to any one of Claims 1 to 4, **characterized in that** the solvent for the coating solution comprises an alcohol which is liquid at room temperature, especially an alcohol having 1 to 4 carbon atoms.

6. A process according to any one of Claims 1 to 5, **characterized in that** the concentration of tungsten and/or molybdenum in the coating solution is from 1 to 50 percent by weight, based on MO₃ (M = W and/or Mo).

7. A process according to any one of Claims 1 to 6, **characterized in that** the coating solution is applied at a temperature of from 15 to 25°C and at a relative atmospheric humidity of from 5 to 50%, preferably by dipping, spraying or spin coating.

8. A process according to any one of Claims 1 to 7, **characterized in that** the thermal aftertreatment takes place at a temperature of from 80 to 400°C for from 10 minutes to 2 days.

9. Electrochromic oxide layer obtainable by the process according to any one of Claims 1 to 8.

10. Electrochromic thin-film electrode comprising the electrochromic oxide layer according to Claim 9 on a transparent conductive layer which is provided on a glass substrate or transparent plastic substrate.

11. Electrochromic thin-film system comprising
(a) an electrochromic oxide layer,
(b) a noncolouring ion insertion layer, and
(c) an electrolyte located between these layers,
**characterized in that** component (a) is an electrochromic oxide layer according to Claim 9.

## Revendications

1. Procédé de fabrication d'une couche d'oxyde électrochrome, **caractérisé par le fait que** l'on fait réagir du peroxyde d'hydrogène avec du tungstène et/ou du molybdène, que l'on applique la solution de revêtement ainsi obtenue contenant de l'oxyde de tungstène et/ou de l'oxyde de molybdène sur un substrat et qu'on soumet la couche déposée à un traitement thermique, procédé dans lequel on dissout dans la solution de revêtement et/ou dans une solution servant à la préparer, un hydroxyde de métal alcalin en une quantité totale comprise entre 0,001 et 1,0 mole de métal alcalin par mole de tungstène et/ou de molybdène.

2. Procédé selon la revendication 1, **caractérisé par le fait que** le métal alcalin est Li, Na et/ou K, de préférence Li et/ou Na.

3. Procédé selon la revendication 2, **caractérisé par le fait que** l'hydroxyde de métal alcalin est l'hydroxyde de lithium.

4. Procédé selon l'une quelconque des revendications 1 à 3, **caractérisé par le fait que** l'hydroxyde de métal alcalin est utilisé en une quantité totale comprise entre 0,01 et 0,5 mole de métal alcalin par mole de tungstène et/ou de molybdène.

5. Procédé selon l'une quelconque des revendications 1 à 4, **caractérisé par le fait que** le solvant utilisé pour la solution de revêtement est un alcool liquide à température ambiante, en particulier un alcool comportant de 1 à 4 atomes de carbone.

6. Procédé selon l'une quelconque des revendications 1 à 5, **caractérisé par le fait que** la concentration de tungstène et/ou de molybdène dans la solution de revêtement est comprise entre 1 et 50 % en poids rapporté au poids de MO₃ (M = W et/ou Mo).

7. Procédé selon l'une quelconque des revendications 1 à 6, **caractérisé par le fait que** l'application de la solution de revêtement se fait à une température comprise entre 15 et 25 °C et à un taux d'humidité relative compris entre 5 et 50 %, de préférence par immersion, pulvérisation ou centrifugation.

8. Procédé selon l'une quelconque des revendications 1 à 7, **caractérisé par le fait que** le traitement thermique se fait à une température comprise entre 80 et 400 °C et a une durée comprise entre 10 minutes et 2 jours.

9. Couche d'oxyde électrochrome que l'on peut obtenir par le procédé selon une des revendications 1 à 8.

10. Electrode à couche mince électrochrome comprenant une couche d'oxyde électrochrome selon la revendication 9 sur une couche conductrice transparente, laquelle se trouve sur un substrat en verre ou sur un substrat transparent en matière plastique.

11. Système à couche mince électrochrome comprenant
(a) une couche d'oxyde électrochrome,
(b) une couche d'insertion d'ions non colorante et
(c) un électrolyte situé entre ces couches,
**caractérisé par le fait que** le composant (a) est une couche d'oxyde électrochrome selon la revendication 9.
